# EUROPEAN PATENT APPLICATION

(11) **EP 2 282 567 A1**
(43) Date of publication of application: **09.02.2011**
(21) Application number: 10006359.3
(22) Date of filing: 18.06.2010
(51) Int. Cl.: H04W 16/12, H04W 84/04

(54) **Method for allocating frequencies in a wireless network including femtocells**

(30) Priority: 16.07.2009 US 504352
(71) Applicant: Mitsubishi Electric Corporation, Tokyo 100-8310 (JP)
(72) Inventor: Yim, Raymond, Cambridge, MA 02138 (US); Tarokh, Vahid, Cambridge, MA 02139 (US); Zhang, Jinyun, Cambridge, MA 02141 (US); Iwane, Yasushi, Chiyoda-ku Tokyo 100-8310 (JP)
(74) Representative: Pfenning, Meinig & Partner GbR

(57) **Abstract**

Frequencies are allocated in a wireless network, wherein the network includes a set of macrocells and a set of femtocells, and wherein each macrocell includes a base station (BS) and each femtocell includes a femtocell base station. A frequency spectrum is assigned to the network. The frequency spectrum is partitioned into bands of frequencies. The bands of frequencies are allocated to the set of BS for communicating with user equipments (UE) in the set of macro cells, and guard bands of frequencies, within which no data are transmitted between the UE and the macro cell BS. The guard bands are assigned to the set of femtocell base station for communicating with UE in the set of femtocells.

## Description

### Field of the Invention

This invention relates generally to mobile wireless networks, and more particularly to frequency allocation in femtocells.

### Background of the Invention

*A femtocell* is a relatively small wireless network serviced by a femtocell base station or alternatively called a home node base station (HNB) in residential or small business environments. User equipment (UE) communicates either with macro base station (BS) or femto BS. When the UE communicates with the femtocell BS, it is also called a home UE (HUE). Typically, the service provider is assigned a frequency spectrum. The frequency spectrum can be partitioned into bands to allocate to the macrocells and femtocells as needed. Potentially, this can cause interference.

The femtocell extends coverage of the macrocell indoors, especially where access would otherwise be limited or unavailable, see Chandrasekhar et al., "Femtocell networks: a survey," Communications Magazine, vol. 46, no. 9, pp. 59-67, September 2008, and Yeh et al., "WiMAX Femtocells: A perspective on network architecture, capacity, and coverage," IEEE Communications Magazine, vol. 46, no. 10, pp.58-65, October 2008.

Figure 1A shows the HNB 110 in a residence 120 serving HUE 130 in the femtocell 140.

Figure 1B shows a macrocell 151 of a macro base station 150, as well as that for the femtocell. The interference from the femtocell potentially causes coverage holes 141 and 142 for macrocell user equipments (UE) 131 operating in cochannel (CoCh) and adjacent channels (AdCh), respectively. In mobile networks, coverage holes are defined as areas wherein UE cannot operate, for any reason.

Figure 2 shows that the coverage areas of adjacent HNBs 161-162, and a corresponding coverage hole 171 caused by adjacent HUE 172.

Clearly there is a trade-off between the coverage area of the femtocell and the interference outage area for other cells, whether these cells are cochannel macrocells, adjacent channel macrocells or co-channel adjacent femtocells.

It is desired to minimize the interference by HNBs to macrocells, when the HNBs are allocated channels from the same set of frequency bands as the macrocells in which they operate.

**Interference Reduction**

Interference can be reduced by allocating different frequency bands to femtocells than macrocells. However, 'unallocated frequency bands may not always be available or economically feasible, particularly when the number of femtocells is large. Because femtocells are relatively small, when compared with macrocells, transmission power can be reduced to minimize interference with the macrocells operating in the same and adjacent frequency bands. Typically, the transmit power in femtocells is less than one hundredth the power of macrocells. However, reducing power also reduces throughput to 300 kbs or less. Other means, such as interference rejection and beamforming, are too complex for large scale deployment.

### Summary of the Invention

Embodiments of the invention provide a method for allocating frequencies used for guard bands in macrocells to femtocells. This significantly reduces the interference between femtocells and macrocells.

### Brief Description of the Drawings

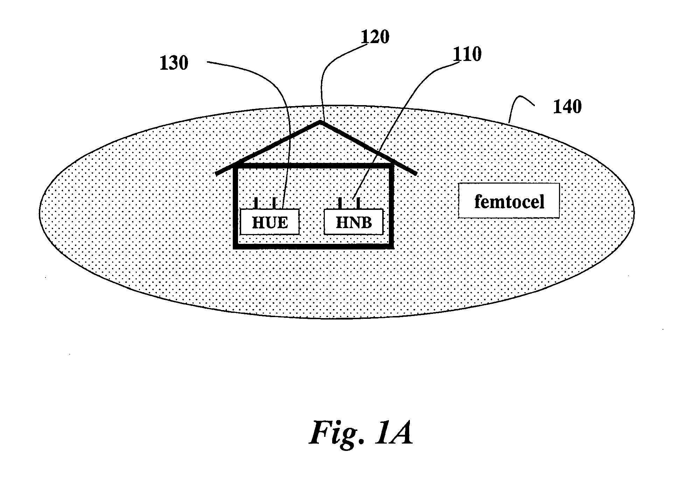

Figure 1A is a schematic of a femtocell;

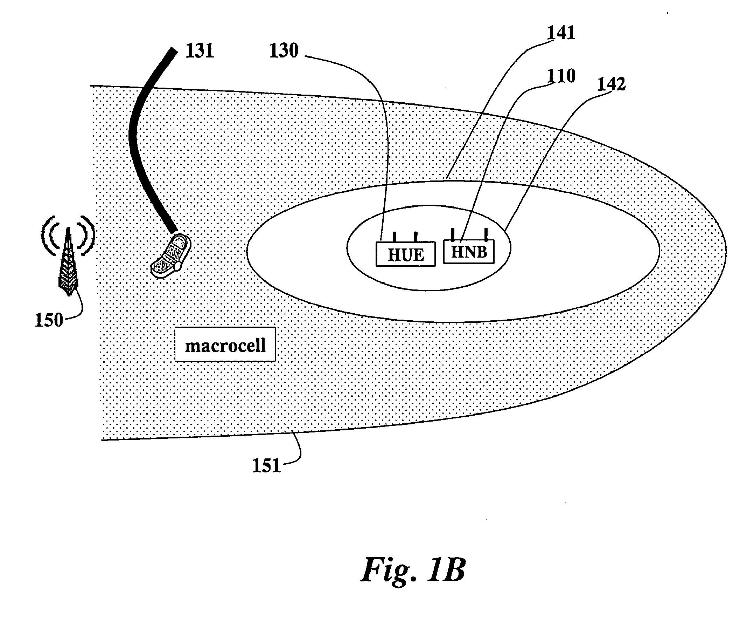

Figure 1B is a schematic of a femtocell operating in a coverage area of a macrocell;

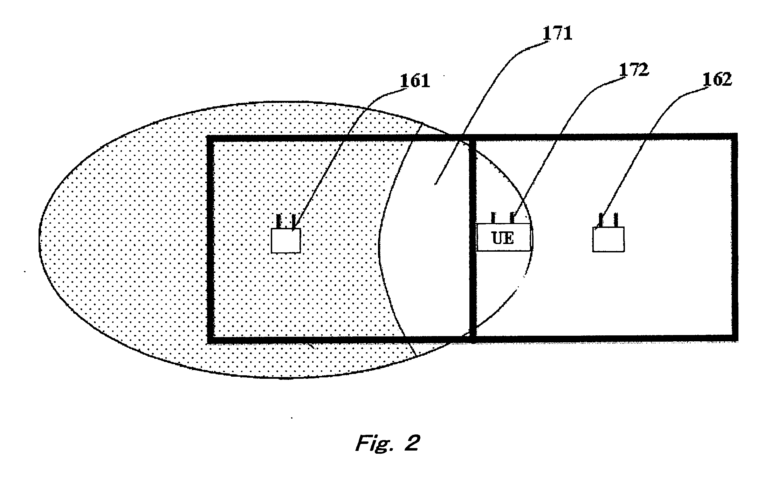

Figure 2 is a schematic of adjacent femtocells;

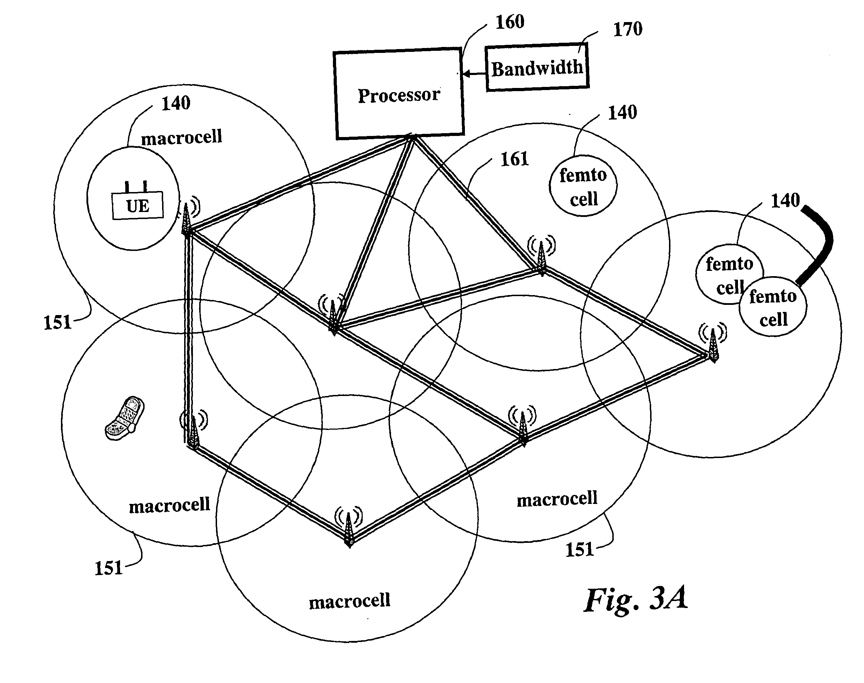

Figure 3A is a schematic of macrocells and femtocells according to embodiments of the invention;

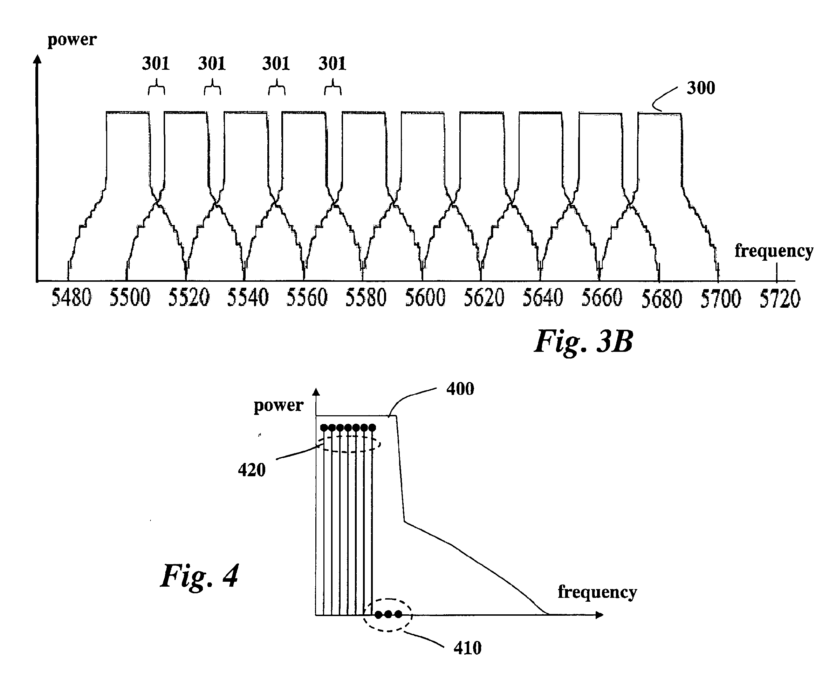

Figure 3B is a schematic of frequency allocation in a WiMAX network according to embodiments of the invention;

Figure 4 is a transmit mask for the frequency allocation of Figure 3;

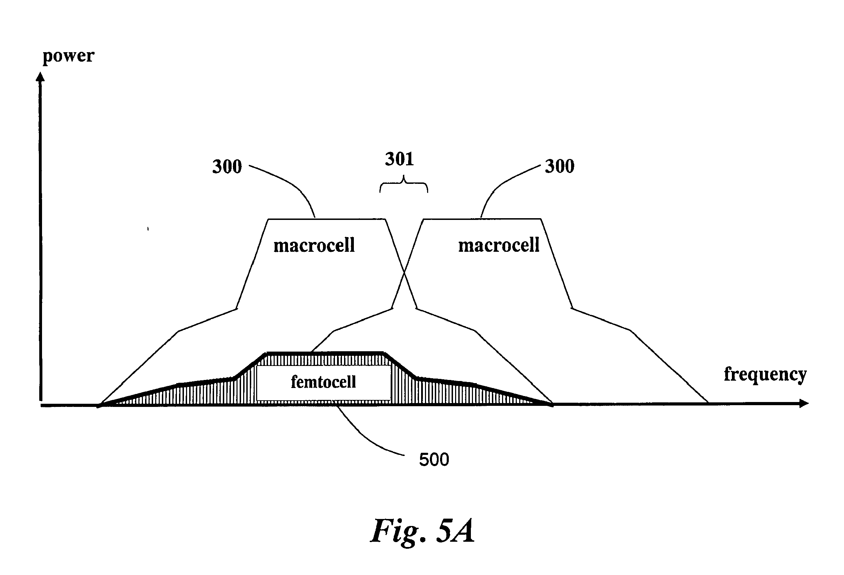

Figure 5A is a schematic of prior art femtocell frequency allocation;

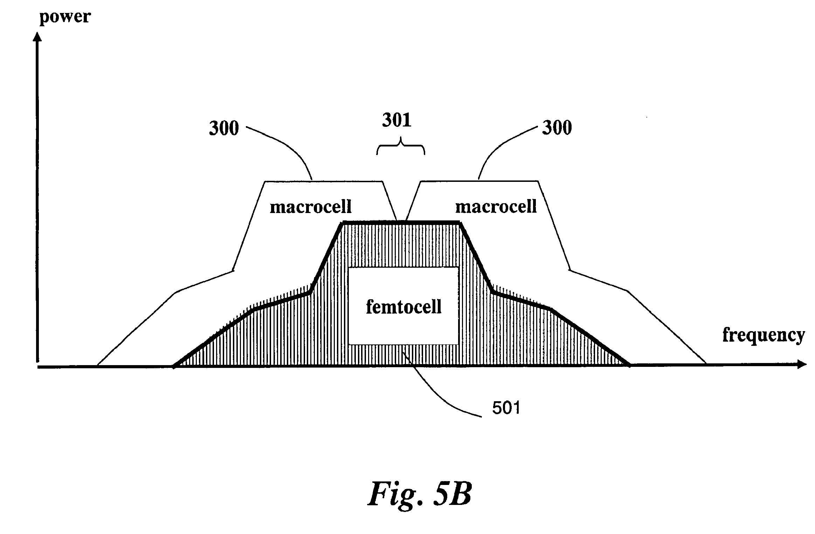

Figure 5B is a schematic of femtocell frequency allocation to guard bands according to embodiments of the invention; and

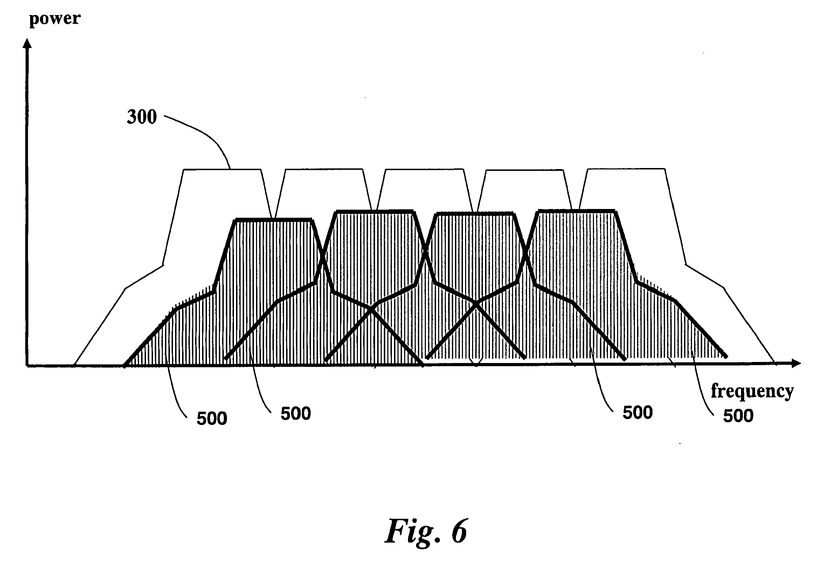

Figure 6 is a schematic of frequency allocation to adjacent femtocells according to embodiments of the invention.

### Detailed Description of the Preferred Embodiment

Figure 3A shows a network including a set of (one or more) macrocells 151 and a set of (one or more) femtocells 140. Each macrocell includes a base station (BS), and each femtocell a home network base station (HNB). The base stations are connected to a coordinator processor 160 by an infrastructure 161. The processor is responsible for overseeing the overall operation of the network. The processor can be located in one of the base stations. The BSs provide services to user equipment (UE) 131, e.g., mobile telephones, and the HNBs provide services to home user equipment (HUE) 130. As defined herein, the HUE only communicates with the HNB, which then communicates with the BS.

One function performed by the processor 160 is resource allocation. An important limited resource is frequency. Typically, the service provider for the network is assigned a bandwidth of frequencies 170. The service provider can partition the bandwidth into frequency bands to assign to the macrocells, and the base stations can further partition the bands into subbands to allocate to user equipment. One important consideration during the frequency allocation is to minimize inter- and intra-cell interference.

Therefore, macrocells use frequency guard bands to separate channels, e.g., multicarrier OFDM or OFDMA networks such as Worldwide Interoperability for Microwave Access (WiMAX) and LTE, and TDMA or TDMA/FDMA networks such GSM and IS 136+. Even CDMA Evolution-Data Optimized (EVDO) networks have guard band between groups of channels. The guard bands minimize interference when adjacent cells are assigned adjacent frequency bands.

Figure 3B shows an example of the frequency allocation in a WiMAX network. The assigned bandwidth of 5 GHz is partitioned a set of frequency bands 300, e.g., each band is a 20 MHz. Guard bands 301 separate the frequency bands.

Figure 4 shows a corresponding transmit mask 400, with sharp transitions, as a function of relative dB and frequency, which approximates a bandpass filter.

Because it is hard to implement such a transmit filter, some OFDM subcarriers 410 in the guard bands are not used at all, or *null,* i.e., no data are carried. Other active subcarriers 420 carry data information. Even though the transmit mask is non-zero in some of the null bands, no data are transmitted in the null band by any of the macrocell. For a 20 MHz network with 2048 OFDM subcarriers, 184 leftmost subcarriers and 183 rightmost subcarriers are unused, i.e., of the 2048 subcarriers, 368 subcarriers are null, which correspond to 1.787 MHz on the rightmost part of each carrier, and 1.797 MHz on the leftmost part of each carrier. Therefore, as defined herein, a guard band includes frequencies *that are not allocated to any macrocells.*

In prior art system, as shown in Figure 5A, a femtocell 500 has the same center frequency as macrocell 300, with much lower transmit power.

As shown in Figure 5B, we provide a new center frequency that is unused by the macrocell for femtocell 501 uses. This center frequency is located in the guard band of the macrocell 300. Optimally, we operate the femtocells at the center or near the border of two adjacent null bands. As shown in Figure 3B, femtocells can operate at null bands 301 centered at 5510 MHz, 5530 MHz, 5550 MHz, etc. to reduce interference caused by macrocell operations, and also to reduce interference from the femtocell, operating at the same transmit power, to the macrocell with higher spectral efficiencies at the same transmit power. This way, the transmit power of the femtocell can be greatly increased, and the data rate in the femtocell can also increase by at least one order of magnitude, e.g., 65.3 Mbps for the downlink and 24.4 Mbps for the uplink.

To minimize interference, even though the transmit mask of the femtocell extends beyond the guard band, the femtocell only transmits data on subcarriers that are within the guard band. Alternatively, the femtocell optionally selects to transmit data also on subcarriers that are located within the transmit mask and outside of the guard band of the macrocells. This way, the femtocell achieves higher data rate, and the macrocell UE has more interference.

Adjacent femtocells can operate in different guard-bands as in Figure 6. This is hard to accomplish in a conventional settings when no guard bands are used. While there are plenty of guard bands available in densely populated areas, there are not many unallocated macrocell channels. This ability to make frequency separation between adjacent femtocells and reduce the femtocell to femtocell interference makes femtocell transmission in guard band even more appealing.

To further minimize interference from adjacent macrocells and femtocells, the macrocell can assign the subcarriers used for transmitting control information to be near the center frequency of the channel.

The frequency allocation as described herein does not impact the operation of conventional UE for macrocells, or and of the applicable standards. UE for the femtocells needs to be enabled to operate in the guard bands. Specifically, in addition to the center frequencies of the macrocells, the UE also searches over the center frequencies of the femtocells.

Although the invention has been described by way of examples of preferred embodiments, it is to be understood that various other adaptations and modifications may be made within the spirit and scope of the invention. Therefore, it is the object of the appended claims to cover all such variations and modifications as come within the true spirit and scope of the invention.

## Claims

1. A method for allocating frequencies in a wireless network, wherein the wireless network includes a set of macrocells and a set of femtocells, wherein each macrocell includes a base station and each femtocell includes a femtocell base station, steps of the method are performed by a processor, comprising the steps of:
assigning a frequency spectrum to the wireless network;
partitioning the frequency spectrum into bands of frequencies;
allocating the bands of frequencies to the set of base station for communicating with user equipments in the set of macro cells, and guard bands of frequencies, within which no data are transmitted between the user equipments and the macro cell base station; and
assigning the guard bands to the set of femtocell base station for communicating with the user equipments in the set of femtocells.

2. The method of claim 1, wherein the wireless network uses Orthogonal Frequency Division Multiplexing.

3. The method of claim 1, wherein the wireless network uses Orthogonal Frequency Division Multiple Access.

4. The method of claim 1, wherein the guard bands include frequencies of null subcarriers in a transmit mask.

5. The method of claim 1, wherein center frequencies for the set of femtocell base stations are at a middle of the guard bands.

6. The method of claim 1, further comprising the step of:
setting a maximum per sub-carrier transmit power of the femtocell base station to a value given by a transmit power mask of the base station.

7. The method of claim 1, wherein the femtocells only transmit data on subcarriers that are within the guard band.

8. The method of claim 1, wherein the femtocells transmit data on subcarriers within and outside of the guard bands.

9. The method of claim 1, wherein the user equipment searches over center frequencies used by the macrocells and the femtocells.

10. The method of claim 1, wherein adjacent femtocells operate in different guard bands.

11. The method of claim 1, wherein the base station transmit control information near center frequencies of the bands of frequencies.

12. A wireless network, wherein the network includes a set of macrocells and a set of femtocells, wherein each macrocell includes a base station and each femtocell includes a femtocell base station, comprising:
means for assigning a frequency spectrum to the wireless network;
means for partitioning the frequency spectrum into bands of frequencies;
means for allocating the bands of frequencies to the set of BS for communicating with user equipments in the set of macro cells, and guard bands of frequencies, within which no data are transmitted between the user equipments and the macro cell base station; and
means for assigning the guard bands to the set of femtocell base station for communicating with user equipments in the set of femtocells.
